**Europäisches Patentamt**

**European Patent Office**

**Office européen des brevets**

(11) Publication number : **0 289 797 B1**

## EUROPEAN PATENT SPECIFICATION

(45) Date of publication of patent specification :
02.11.94 Bulletin 94/44

(51) Int. Cl.$^5$: **G02B 1/04**

(21) Application number : **88105565.1**

(22) Date of filing : **07.04.88**

(54) **Contact lens material.**

(30) Priority : **10.04.87 JP 86920/87**

(43) Date of publication of application :
**09.11.88 Bulletin 88/45**

(45) Publication of the grant of the patent :
**02.11.94 Bulletin 94/44**

(84) Designated Contracting States :
**DE FR GB IT**

(56) References cited :
**EP-A- 0 064 809**
**EP-A- 0 134 861**
**US-A- 4 376 800**

(73) Proprietor : **KUREHA KAGAKU KOGYO
KABUSHIKI KAISHA
1-9-11, Nihonbashi, Horidome-cho
Chuo-ku Tokyo 103 (JP)**

(72) Inventor : **Sakagami, Teruo
3-10-22, Kasuga-cho
Nerima-ku Tokyo (JP)**
Inventor : **Machida, Katsuichi
3-63-1, Kojima-cho
Chofu-shi Tokyo (JP)**
Inventor : **Kokubun, Kenichi
Kureha Kagaku Urawa-ryo
7-23-16, Ryoke
Urawa-shi Saitama (JP)**

(74) Representative : **Patentanwälte Grünecker,
Kinkeldey, Stockmair & Partner
Maximilianstrasse 58
D-80538 München (DE)**

## Description

This invention relates to a contact lens material, and more specifically to a contact lens material consisting of a polymer having good oxygen permeability and is useful as hard contact lenses.

Both spectacle lenses and contact lenses are generally used for the correction of vision. Fewer people wear contact lenses these days compared to spectacle lens users. As reasons for this trend, contact lens materials which have been used widely to date seem to have various inherent problems. Polymethyl methacrylate may be mentioned as a contact lens material which has been used widely to date. Polymethyl methacrylate is preferred as a contact lens material in that its machining is easy, its transparency as an optical property is high and its durability is excellent. Polymethyl methacrylate is however accompanied by such problems that the wearing comfortableness is poor due to its high hardness and its oxygen permeability is too low to permit long-time wearing.

As soft lenses improved in such problems, water-containing gel lenses and silicone rubber lenses have been proposed. Water-containing gel lenses are preferred in that when the water content is high, the oxygen permeability is high and good wearing comfortableness is obtained. They are however accompanied by such drawbacks that they have low strength and tend to become culture media for bacteria. Moreover, a further drawback has been pointed out that they are difficult to provide desired optical characteristics.

Silicone rubber lenses are soft and have good oxygen permeability. These materials are however essentially non-wettable, so that the problem of contamination by proteins, lipids and the like has arisen. They are also accompanied by a potential danger that their movements on the cornea may be interfered. As a matter of fact, there are reports on cases in which contact lens wearers suffered from serious damages or problems such as corneal damages.

On the other hand, fluorinated polymers have been known as contact lens materials having good oxygen permeability. Copolymers such as fluorinated acrylates and fluorinated methacrylates are disclosed, for example, in Japanese Patent Laid-Open No. 51705/1982, Japanese Patent Laid-Open No. 118408/1981, Japanese Patent Laid-Open No. 19918/1984, Japanese Patent Publication No. 46614/1976, Japanese Patent Laid-Open No. 211119/1982, Japanese Patent Laid-Open No. 29660/1979, etc. Japanese Patent Laid-Open No. 127914/1983 discloses polymers containing perfluorooxyalkyl groups introduced in their backbone chains. These contact lens materials however do not fully have well-balanced properties among oxygen permeability, hardness, machinability, wearing comfortableness, and the like.

An object of this invention is to provide a contact lens material which is free of the various drawbacks of the conventional contact lens materials and has well-balanced properties among oxygen permeability, hardness, machinability, wearing comfortableness, etc.

Said object has been attained by providing a contact lens material consisting of a polymer containing fluorinated side chains and urethane bonds which has been obtained by reacting and polymerizing the following component (A) or at least 15 wt.% of the following component (A) and up to 85 wt.% of the following component (B);

Component (A) being a mixture of (1) a radical-polymerizable monomer containing at least one active hydrogen atom which can undergo an addition reaction with an isocyanate group, (2) a bifunctional or higher functional polyisocyanate compound and (3) a compound represented by $R_f$-$(OH)_n$, $R_f$-COOH, $R_f$-$NH_2$ or $R_f$-$CONH_2$ wherein n stands for 1 or 2 and $R_f$ means a fluorinated $C_{1-25}$-alkyl group, alkylphenyl group or phenyl group; or an addition reaction product thereof, and

Component (B) being at least one monomer copolymerizable with the radical-polymerizable monomer (1) of the component (A).

Since the contact lens material according to the present invention consists of a polymer containing not only fluorinated side chains but also urethane bonds, its oxygen permeability is high thereby to provide a contact lens which can replenish sufficient oxygen to the cornea therethrough and can hence be worn for a long period of time. In addition, the contact lens material is strong mechanically and retains sufficient softness and flexibility characteristic to urethane resins. Contact lenses obtained from the contact lens material according to this invention hence have good wearing comfortableness. The contact lens material is seldom contaminated by proteins, lipids and the like, because it contains fluorine atoms.

The contact lens material according to this invention seems to have such excellent properties since the polymer of the material contains, as an essential component, the component containing fluorinated side chains and urethane bonds.

The polymer, which constitutes the contact lens according to this invention, is either a polymer obtained by polymerizing a mixture of the below-described compounds (1), (2) and (3) or an addition reaction product thereof, or a copolymer obtained by reacting and polymerizing at least 15 wt.% of the component (A) and up

2

to 85 wt.% of the below-described component (B). Such a polymer contains fluorinated side chains and urethane bonds.

Component (A):

A mixture of (1) a radical-polymerizable monomer containing at least one active hydrogen atom which can undergo an addition reaction with an isocyanate group, (2) a bifunctional or higher functional polyisocyanate compound and (3) a fluorinated alcohol represented by $R_f.(OH)_n$, a fluorinated carboxylic acid represented by $R_f.COOH$, a fluorinated amine represented by $R_f.NH_2$ or a fluorinated amide represented by $R_f.CONH_2$ wherein n stands for 1 or 2 and $R_f$ means a fluorinated $C_{1-25}$-alkyl group, alkylphenyl group or phenyl group; or an addition reaction product thereof.

Component (B):

A monomer copolymerizable with the radical-polymerizable monomer (1) of the component (A).

Since the above polymer is composed of the component (A) or the components (A) and (B), has urethane bonds and contains one or more fluorine atoms in its side chains, the polymer has high oxygen permeability and anti-contamination properties. Owing to the inclusion of the urethane bonds, it assures pleasant wearing comfortableness. The polymer therefore satisfies various conditions required for contact lenses.

In the reaction and polymerization of the component (A) employed in the present invention, active hydrogen atoms of the radical-polymerizable monomer (1) and those of the fluorine-containing compound (3) both react with the bifunctional or higher functional polyisocyanate compound, resulting in the formation of urethane bonds having fluorinated side chains. (The term "urethane bonds" should be interpreted in a broad sense so as to embrace urea bonds, biuret bonds and the like. The same definition will be applied hereinafter.). The above-described formation of urethane bonds having fluorinated side chains has resulted in the provision of a contact lens material which has good oxygen permeability and excellent anti-contamination properties, both required for contact lenses, and assures- pleasant wearing comfortableness.

The components useful in the practice of this invention will each be described specifically.

Component (A):

The component (A) is a mixture of the following compounds (1) - (3) or an addition reaction product thereof.
(1) Radical-polymerizable monomer containing at least one active hydrogen atom:
Here, the term "active hydrogen atom" means a hydrogen atom which can react with an isocyanate group of the below-described polyisocyanate compound (2) to form a urethane bond. Specifically, it means a hydrogen atom of a hydroxyl group (including a phenol group), amino group, carboxyl group, amido group or the like. This monomer is not limited to the one that contains only one active hydrogen atom per molecule but may contain plural active hydrogen atoms per molecule.

The radical-polymerizable monomer is not limited to the one that contains only one radical-polymerizable group per molecule but may contain a plurality of radical-polymerizable groups per molecule. It is rather preferred in many instances that the monomer contains many radical-polymerizable groups, because the crosslinked structure of the resulting contact lens material becomes dense and its polishing work becomes easier.

As specific examples of the radical-polymerizable monomer(1), may be mentioned aromatic vinyl compounds such as p-vinylphenol, p-vinylbenzyl alcohol, p-carboxystyrene and m-aminostyrene as well as acrylic monomers, methacrylic monomers and allyl monomers such as the following monomers:

Acrylic acid, methacrylic acid, 2-hydroxyethyl acrylate, 2-hydroxyethyl methacrylate, allyl alcohol, 2-hydroxy-1,3-dimethacryloxypropane, mono-β-acryloxyethyl phthalate, mono-β-acryloxyethyl succinate, 3-chloro-2-hydropropyl methacrylate, tetramethylolmethane trimethacrylate, acrylamide, N-methylol methacrylamide, N-hydroxyethyldiallyl isocyanurate, 1-acryloxy-2-hydroxy-3-phenoxypropane, 1,2-bis(3-acryloxy-2-hydroxypropoxy)ethane, 1,2-bis(3-methacryloxy-2-hydroxypropoxy)ethane, 1,2-bis(3-methacryloxy-2-hydroxypropoxy)propane, 2-hydroxy-1,2-bis(3-acryloxy-2-hydroxypropoxy)propane, 2,2-bis{2-(3-methacryloxy-2-hydroxypropoxy)-1-methylethoxyphenyl}propane, 2-hydroxypropyl methacrylate, p-acryloxybenzyl alcohol, 2,2-acryloxyphenylhydroxyphenylpropane, etc.

Needless to say, the radical-polymerizable monomer is not necessarily limited to the above specific examples, and two or more radical-polymerizable monomers may be used in combination instead of only one kind of radical polymerizable monomer. As the radical-polymerizable monomer, it is particularly preferred to use a diacrylate or dimethacrylate which contains one or more hydroxyl groups.

(2) Bifunctional or higher functional polyisocyanate compound:

The bifunctional or higher functional polyisocyanate compound is an essential ingredient which forms the component (A) in the present invention. The radical-polymerizable monomer (1) having at least one active hydrogen atom and the fluorine-containing compound (3) are connected together by way of the bifunctional or higher functional polyisocyanate compound.

As specific examples of the bifunctional or higher functional polyisocyanate compound useful in the practice of this invention, may be mentioned - as diisocyanate compounds - hexamethylene diisocyanate, nonamethylene diisocyanate, isophorone diisocyanate, octamethylene diisocyanate, 2,2,4-trimethylhexamethylene diisocyanate, dicyclohexylmethane diisocyanate, xylylene diisocyanate, tetramethylene diisocyanate, 4,4'-diphenylmethane diisocyanate, bis(isocyanatomethyl)-cyclohexane, tolylene diisocyanate, 3,3'-dimethyl-4,4'-bisphenylene diisocyanate, and the like.

Illustrative specific trifunctional and higher functional polyisocyanate compounds may include the trimer of hexamethylene diisocyanate, the biuret-forming reaction product of hexamethylene diisocyanate, the adduct reaction product of hexamethylene diisocyanate and trimethylol propane, trifunctional and tetrafunctional isocyanate compounds derived from isophorone diisocyanate, 2-isocyanatoethyl-2,6-diisocyanatoethylhexanoate, 2-isocyanatopropyl-2,6-diisocyanatohexanoate, 4,4',4"-isocyanatotriphenylmethane, etc.

The aliphatic polyisocyanate compounds are preferred among the above bifunctional and higher functional polyisocyanate compounds, because they can provide contact lens materials which do not yellow even by heat or light.

The above polyisocyanate compounds may be used either singly or in combination. The use of a trifunctional or higher polyfunctional polyisocyanate compound is especially preferred, because it allows the formation of a highly-crosslinked structure to provide high strength.

(3) Fluorinated alcohol represented by $R_f.(OH)_n$, fluorinated carboxylic acid represented by $R_f.COOH$, fluorinated amine represented by $R_f.NH_2$ or a fluorinated amide represented by $R_f.CONH_2$ wherein n stands for 1 or 2 and $R_f$ means a fluorinated $C_{1-25}$-alkyl group, alkylphenyl group or phenyl group:

As $R_f$, the hydrogen atoms of the corresponding unfluorinated alkyl, alkylphenyl or phenyl group may be fluorinated either entirely or partly.

As specific examples usable as the fluorine-containing compound, may be mentioned 2,2,3,3-tetrafluoro-1-propanol, 2,2,3,4,4,4-hexafluoro-1-butanol, 2,2,2-trifluoroethanol, 1,1,1,3,3,3-hexafluoro-2-propanol, 3-(perfluoro-n-hexyl)propane-1,2-diol, 3-(perfluoro-n-octyl)propane-1,2-diol, 2-(perfluoro-n-hexyl)ethanol, 2-(perfluoro-n-octyl)ethanol, 2-(perfluoro-n-decane)ethanol, 2-(perfluoro-n-dodecane)ethanol, pentafluorophenol, p-fluorophenol, perfluorooctanoic acid, trifluoroacetic acid, perfluoropropionic acid, 3,5-dichloro-2,4-difluoroaniline, 4-trifluoromethylbenzamide, 4-trifluoromethylbenzoic acid, 3-trifluoromethylaniline, 3,5-ditrifluoromethylaniline, etc. The fluorine-containing compound is not limited to such specific examples in the present invention. The above specific examples may be used either singly or in combination.

As has been described above, the component (A) essential for the present invention is composed of a mixture of the compounds (1), (2) and (3) or an addition reaction product. The component may be obtained by mixing the compounds (1) - (3) and then reacting and polymerizing them or by first forming an addition reaction product and then polymerizing them. The isocyanate groups of the polyisocyanate compound (2) react with active hydrogen atoms of the radical-polymerizable monomer (1) and fluorine-containing compound (3) to form urethane bonds, thereby connecting the radical-polymerizable monomer (1) and fluorine-containing compound (3). Further, the radical-polymerizable monomer (1) with the polyisocyanate compound (2) and fluorine-containing compound (3) bound thereon is polymerized by a polymerization reaction, thereby forming the polymer of this invention.

Since the addition reaction of the component (A) may be induced merely by heating in some instances, a fluorinated urethane monomer may be obtained by simply heating the component (A). It is also possible to use a reaction initiator employed commonly for the production of polyurethane, such as di-n-butyltin dilaurate, 1,2,2,6,6-pentamethyl-4-hydroxypiperidine, stannous octoate, dimethyltin dichloride or the like. These reaction initiators may be used preferably in a proportion of 0.001 - 3.0 parts by weight per 100 parts by weight of the component (A).

Regarding the proportions of the individual compounds in the component (A) described above, the ratio of the total molar number [H] of active hydrogen atoms of the radical-polymerizable monomer (1) and those of the fluorine-containing compound (3) to the molar number [NCO] of isocyanate groups of the polyisocyanate compound (2), namely, [H]/[NCO] (this ratio will hereinafter be called "active hydrogen equivalent") becomes more desirable as it approaches 1. In the present invention, the value of the active hydrogen equivalent may preferably be greater than 0.7 but smaller than 1.5. Any values of 1.5 and greater are not preferred, because a large proportion of the radical-polymerizable monomer (1) or fluorine-containing compound (3) remains in a state not coupled with the polyisocyanate compound (2), i.e., in a free state. On the other hand, any values of 0.7 and smaller are not preferred either since many unreacted isocyanate groups remain and the properties of the resultant polymer are liable to undergo changes on standing.

The fluorine-containing compound (3) generally has a greater fluorine content as the carbon number of the group $R_f$ such as the fluorinated alkyl group increases. The kind of the group $R_f$ may be selected in accordance with the oxygen permeability desired for the polymer to be obtained. It is however preferable to adjust the proportions of the individual compounds of the component (A) so as to give a total fluorine content of 3 wt.% or higher to the component (A), because any fluorine content lower than 3 wt.% will result in a polymer having low oxygen permeability.

In the present invention, the component (A) capable of affording such a fluorinated urethane is used in such a proportion that it accounts for 15 - 100 wt.% of the total amount of the contact lens material. The proportion of the component (A) may preferably be at least 20 wt.%. It is not preferred to use the component (A) in any proportion lower than 15 wt.%, since the resulting polymer has low oxygen permeability and moreover, cannot provide pleasant wearing comfortableness which is otherwise derived from the flexibility characteristic to the polyurethane.

The present invention also permits the use of the component (B), which is at least one monomer copolymerizable with the radical-polymerizable monomer (1) of the component (A), in a proportion ranging from 0 wt.% to 85 wt.% together with the component (A). The combined use of the component (B) can bring about the following advantages over the polymer obtained from the component (A) alone.

(a) The hardness and strength can be improved, thereby permitting the provision of a contact lens material having great mechanical strength.

(b) The refractive index can be increased.

(c) The hydrophilicity can be increased, so that contact lenses having good compatibility with tear on the cornea can be obtained.

(d) The oxygen permeability can be improved.

Illustrative examples of the monomer employed for such purposes may include aromatic vinyl compounds such as styrene, α-methylstyrene, p-chlorostyrene, vinyltoluene, vinylnaphthalene, diisopropenylbenzene, isopropenylnaphthalene, p-vinylphenol, p-vinylbezoic acid, divinylbenzene; aliphatic vinyl compounds such as N-vinylpyrrolidone, butadiene, 4-vinyl-1-cyclohexene, vinyl chloride and vinyl acetate; the acrylate compounds and methacrylate compounds of aliphatic or aromatic, monovalent or polyvalent alcohols, such as methyl methacrylate, methyl acrylate, tert-butyl methacrylate, 2-ethylhexyl acrylate, ethylene glycol dimethacrylate, triethylene glycol diacrylate, glycerin trimethacrylate, trimethylolpropane trimethacrylate, 2-hydroxyethyl methacrylate, trimethylolpropane diacrylate, 2-hydroxyethyl acrylate, tetramethylolmethane trimethacrylate, phenyl methacrylate, methacryloxypolyethoxybenzene and 2,2-bis(4-acryloxyethoxyphenyl)propane; acrylic acid, methacrylic acid, and their derivatives such as acrylamide and N-methylol methacrylamide; aliphatic and aromatic allyl compounds such as allyl alcohol, allyl phenol, triallyl isocyanurate, diethylene glycol bisallylcarbonate and diallyl phthalate; etc.

Among these various monomers, those soluble in water are particularly preferred since they can impart hydrophilicity to polymers to be obtained. As such water-soluble monomers, may be mentioned acrylic acid, methacrylic acid, acrylamide, methacrylamide, 2-hydroxyethyl methacrylate, 2-hydroxyethyl acrylate, allyl alcohol, N-vinylpyrrolidone, 3-hydroxypropyl acrylate, 3-hydroxypropyl methacrylate, 2,3-dihydroxypropyl acrylate, 2,3-dihydroxypropyl methacrylate, 2-carboxyethyl acrylate, 2-carboxyethyl methacrylate, 2-sulfoethyl acrylate, 2-sulfoethyl methacrylate, 2-sulfoamidoethyl acrylate, 2-sulfoamidoethyl methacrylate, vinylsulfonic acid, and the like.

Besides the above-mentioned monomers, it is also possible to use as the monomer of the component (B) one of various fluorinated acrylates or methacrylates such as 2,2,3,3-tetrafluoro-n-propyl acrylate, 2,2,3,4,4,4-hexafluoro-n-butyl methacrylate, trifluoroethyl methacrylate, 2-(perfluoro-n-hexyl)ethyl acrylate, 2-(perfluoro-n-octyl)ethyl methacrylate, 2-(perfluoro-n-decane)ethyl methacrylate, 2-(perfluoro-n-dodecane)ethyl acrylate, the methacryl ester of p-fluorophenol, or perfluorophenyl acrylate. It is preferred to use such a fluorinated alkyl-containing monomer, because a polymer having still better oxygen permeability will be obtained. Acrylate and methacrylate compounds containing one or more organosilane groups, such as acryloxypropyltris(trimethylsiloxy)silane, methacryloxypropylpentamethyldisiloxane, methyl di(trimethylsiloxy)silyl propylglycerol methacrylate, methacryloxypropyl tris(pentamethyldisiloxanyl)silane and bis(methacryloxy butyl)tetramethylsilazane, are also useful monomers in that they can provide good oxygen permeability. Needless to say, the monomer of the component (B) is not necessarily limited to the above-exemplified compounds only in the present invention. Further, these compounds may be used either singly or in combination.

When the component (B) is used in the present invention, its kind and amount are chosen depending on the characteristics of a contact lens material to be obtained. When the component (B) is employed, the radical-polymerizable monomer (1), polyisocyanate compound (2) and fluorine-containing compound (3) of the component (A) are mixed in advance. The resultant mixture is then subjected to an addition reaction by heating it or by using the aforementioned reaction initiator, thereby synthesizing a fluorinated urethane monomer. After mixing the monomer of the component (B) with the fluorinated urethane monomer, they are polymerized using an ordinary radical polymerization initiator so that a contact lens material according to the present invention can be obtained. As an alternative, a radical polymerization reaction may be carried out after the components (A) and (B) have been mixed and the urethane addition reaction of the component (A) has then been conducted, or the components (A) and (B) are mixed and radical polymerization and urethane addition reaction are then allowed to proceed at the same time. Where the component (B) is a compound containing at least one active hydrogen atoms reactive to an isocyanate group, it is preferred to add the component (B) to perform radical polymerization after the component (A) has been reacted beforehand.

The contact lens material of this invention may be obtained directly as a contact lens by charging the polymerizable composition in a mold of a desired shape (for example, a lens-shaped mold) and then causing both urethanation reaction and polymerization reaction to proceed there. The thus-obtained contact lens may thereafter be subjected to machining or polishing in accordance with a known technique. Furthermore, the contact lens material of this invention may be obtained in the form of a rod, block or sheet by the urethane-forming reaction and polymerization reaction. The stock may then be formed into a contact lens by cutting and polishing same.

Since the contact lens material of this invention is composed of the polymer having fluorinated side chains and urethane bonds, it provides contact lenses having excellent oxygen permeability and anti-pollution properties and assuring pleasant wearing comfortableness.

[Examples]

Examples of the present invention will hereinafter be described. It should however be borne in mind that the present invention is not limited to or by the following Examples.

Example 1:

In 300 m$\ell$ of acetone, 15.87 g of 2-hydroxy-1,2-bis(3-acryloxy-2-hydroxypropoxy)propane, a diacrylate having three hydroxyl groups, 30.44 g of isophorone diisocyanate and 13.69 g of 2,2,2-trifluoroethanol were dissolved uniformly (active hydrogen equivalent: 1.0), followed by an addition of 0.03 g of di-n-butyltin dilaurate. The resultant mixture was heated under reflux to synthesize a monomer containing a urethane bond with a trifluoroethyl group as a side chain (fluorine content: about 13 wt.%). After complete removal of the acetone in vacuum, 20 g of methyl methacrylate and 20 g of 2,2,2-trifluoroethyl methacrylate were mixed uniformly. Lauroyl peroxide (0.8 g) was added further to the resultant mixture, and the thus-prepared mixture was poured in a contact lens mold made of glass. A polymerization reaction was conducted at 60°C for 16 hours to obtain a contact lens material according to the present invention.

The contact lens material was transparent. A measurement of its parallel ray transmittance by "Haze Meter TC-H III" (trade name; manufactured by Tokyo Denshoku, Ltd.) gave 92% or higher. The refractive index of the contact lens material was also measured by an Abbe refractometer. Its refractive index ($n_D^{25}$) was 1.462. Further, its specific gravity was 1.311.

With respect to the contact lens material, the oxygen permeability was also measured by an oxygen permeability meter (model: Seikaken). It gave a value as high as $3.2 \times 10^{-11}$ cc·cm/cm²·sec·mmHg at 35°C.

The contact lens material was soft and machinable into a desired shape.

Example 2:

A bifunctional monomer containing a urethane bond with two 2-perfluoro-n-hexylethyl groups as side chains (fluorine content: about 32.5%) was synthesized by mixing 11.39 g of 1,2-bis(3-methacryloxy-2-hydroxypropoxy)ethane, a dimethacrylate having two hydroxyl groups, 14.637 g of isophorone diisocyanate and 23.97 g of 2-(perfluoro-n-hexyl)ethanol (active hydrogen equivalent: 1.0) and then conducting an addition reaction in the same manner as in Example 1. The bifunctional monomer was then added with 20 g of N-vinylpyrrolidone, 30 g of 2,2,3,4,4,4-hexafluorobutyl methacrylate and 0.8 g of lauroyl peroxide as a polymerization initiator, followed by a reaction at 60°C for 16 hours to obtain a transparent, flexible and rod-like contact lens material of this invention. Physical properties of the contact lens material determined in the same manner as in Example 1 are as follows:

Parallel ray transmittance: 92%
Oxygen permeability: 13 x 10$^{-11}$ cc·cm/cm$^2$·sec·mmHg
Specific gravity: 1.419
Refractive index, $n_D^{25}$: 1.440

The contact lens material permitted easy machining and polishing.

Example 3:

Uniformly mixed were 7.62 g of 2-hydroxyethyl methacrylate, 11.04 g of m-xylylene diisocyanate, 21.34 g of 2-(perfluoro-n-hexyl)ethanol, 35 g of 2,2,2,-trifluoroethyl methacrylate, 10 g of styrene and 15 g of N-vinylpyrrolidone (active hydrogen equivalent: 1.0), followed by an addition of 0.03 g of di-n-butyltin dilaurate. The resultant mixture was heated to synthesize a monomer which contained a urethane bond with a 2-perfluoro-n-hexylethyl group as a side chain (fluorine content: about 36 wt.%). Lauroyl peroxide (0.8 g) was then added as a polymerization initiator, followed by a reaction at 60°C for 16 hours to obtain a transparent, flexible and rod-like contact lens material according to this invention. Physical properties of the contact lens material determined in the same manner as in Example 1 are as follows:
Parallel ray transmittance: 88%
Oxygen permeability: 2 x 10$^{-11}$ cc·cm/cm$^2$·sec·mmHg
Specific gravity: 1.383
Refractive index, $n_D^{25}$: 1.455

The contact lens material permitted easy machining and polishing.

Example 4:

A bifunctional monomer containing a urethane bond with a perfluoro-n-hexylpropyl group as a side chain (fluorine content: about 23%) was synthesized by mixing 8.67 g of 2-hydroxyethyl acrylate, 14.72 g of 3-(perfluoro-n-hexyl)propane-1,2-diol and 16.6 g of isophorone diisocyanate (active hydrogen equivalent: 1.0) and then conducting an addition reaction in the same manner as in Example 1. The monomer was then mixed with 10 g of 2-hydroxyethyl methacrylate, 35 g of 2,2,3,4,4,4-hexafluorobutyl methacrylate and 15 g of perfluoro-n-octylethyl methacrylate, followed by polymerization in the same manner as in Example 2 to obtain a transparent, flexible and rod-like contact lens material of this invention. Physical properties of the contact lens material determined in the same manner as in Example 1 are as follows:
Parallel ray transmittance: 91%
Oxygen permeability: 24 x 10$^{-11}$ cc·cm/cm$^2$·sec·mmHg
Specific gravity: 1.456
Refractive index, $n_D^{25}$: 1.432

The contact lens material permitted easy machining and polishing.

Example 5:

Mixed were 11.75 g of 2-hydroxy-1,3-dimethacryloxypropane, 11.8 g of 2,4-ditrifluoromethylaniline and 11.45 g of isophorone diisocyanate (active hydrogen equivalent: 1.0; fluorine content: about 16.7 wt.%), followed by addition of 20 g of N-vinylpyrrolidone and 45 g of 2,2,3,4,4,4-hexafluorobutyl methacrylate. Urethanation and polymerization were conducted in the same manner as in Example 3, thereby obtaining a transparent, pale yellow, flexible and rod-like contact lens material according to this invention. Physical properties of the contact lens material determined in the same manner as in Example 1 are as follows:
Parallel ray transmittance: 87%
Oxygen permeability: 2 x 10$^{-11}$ cc·cm/cm$^2$·sec·mmHg
Specific gravity: 1.384
Refractive index, $n_D^{25}$: 1.482

The contact lens material permitted easy machining and polishing.

Example 6:

Mixed were 4.7 g of acrylamide, 12 g of isophorone diisocyanate and 13.3 g of 3-(perfluoro-n-octyl)propane-1,2-diol (active hydrogen equivalent: 1.0). Following the procedure of Example 1, a urethanated monomer having a perfluoro-n-octylpropyl group as a side chain (fluorine content: about 29 wt.%) was then synthesized.

The urethanated monomer was added and mixed with 15 g of methyl methacrylate, 20 g of N-vinylpyrrolidone and 35 g of 2,2,2-trifluoroethyl methacrylate, followed by polymerization in the same manner as in Example 2 to obtain a transparent and flexible contact lens material according to this invention. Physical properties of the contact lens material determined in the same manner as in Example 1 are as follows:

Parallel ray transmittance: 90%
Oxygen permeability: $1.6 \times 10^{-11}$ cc·cm/cm²·sec·mmHg
Specific gravity: 1.333
Refractive index, $n_D^{25}$: 1.458

The contact lens material permitted easy machining and polishing.

Example 7:

Mixed were 11.67 g of 2-hydroxyethyl methacrylate, 12 g of 2-isocyanatoethyl-2,6-diisocyanato hexanoate as a trifunctional isocyanate and 16.34 g of 2-(perfluoro-n-hexyl)ethanol (active hydrogen equivalent: 1.0). Following the procedure of Example 1, a monomer containing three urethane bonds with a perfluoro-n-hexylethyl group as a side chain (fluorine content: about 27 wt.%) was then synthesized. The monomer was added and mixed with 15 g of N-vinylpyrrolidone, 20 g of 2,2,2-trifluoroethyl methacrylate and 25 g of 2,2,3,4,4,4-hexafluorobutyl methacrylate, followed by polymerization in the same manner as in Example 2 to obtain a transparent and pale yellow contact lens material according to this invention. Physical properties of the contact lens material determined in the same manner as in Example 1 are as follows:

Parallel ray transmittance: 88%
Oxygen permeability: $6 \times 10^{-11}$ cc·cm/cm²·sec·mmHg
Specific gravity: 1.412
Refractive index, $n_D^{25}$: 1.442

The contact lens material permitted easy machining and polishing.

Example 8:

Mixed were 12.85 g of methacrylic acid, 19.95 g of 2-isocyanatoethyl-2,6-diisocyanatohexanoate and 27.2 g of 2-(perfluoro-n-hexyl)ethanol (active hydrogen equivalent: 1.0). Following the procedure of Example 1, a fluorinated urethane monomer containing a perfluoro-n-hexylethyl group as a side chain (fluorine content: about 30.7 wt.%) was then synthesized. The monomer was added and mixed with 10 g of 2-hydroxyethyl methacrylate and 30 g of 2,2,2-trifluoroethyl methacrylate, followed by polymerization in the same manner as in Example 2 to obtain a transparent, pale yellow and rod-like contact lens material according to this invention. Physical properties of the contact lens material determined in the same manner as in Example 1 are as follows:

Parallel ray transmittance: 89%
Oxygen permeability: $6 \times 10^{-11}$ cc·cm/cm²·sec·mmHg
Specific gravity: 1.408
Refractive index, $n_D^{25}$: 1.447

The contact lens material permitted easy machining and polishing.

Example 9:

Mixed were 5.34 g of 2-hydroxyethyl methacrylate, 12.17 g of trimer (NCO content: 21.3 wt.%) of hexamethylene diisocyanate as a trifunctional isocyanate and 7.49 g of 2-(perfluoro-n-hexyl)ethanol (active hydrogen equivalent: 1.0). Following the procedure of Example 1, a fluorinated urethane monomer (fluorine content: about 20 wt.%) containing a perfluoro-n-hexylethyl group as a side chain was then synthesized. The monomer was mixed with 15 g of N-vinylpyrrolidone, 30 g of 2,2,3,4,4,4-hexafluorobutyl methacrylate and 30 g of perfluorooctylethyl methacrylate, followed by polymerization in the same manner as in Example 2 to obtain a transparent and rod-like contact lens material according to this invention. Physical properties of the contact lens material determined in the same manner as in Example 1 are as follows:

Parallel ray transmittance: 92%
Oxygen permeability: $26 \times 10^{-11}$ cc·cm/cm²·sec·mmHg
Specific gravity: 1.446
Refractive index, $n_D^{25}$: 1.436

The contact lens material permitted easy machining and polishing.

Example 10:

To 25 g of of the fluorinated urethane monomer prepared in Example 9 and having a perfluoro-n-hexylethyl group as a side chain and a fluorine content of about 20 wt.%, were added 15 g of N-vinylpyrrolidone, 30 g of 2,2,3,4,4,4-hexafluorobutyl methacrylate and 30 g of methacryloxypropylpentamethyldisiloxane. They were polymerized in the same manner as in Example 2, thereby obtaining a transparent and rod-like contact lens material according to this invention. Physical properties of the contact lens material determined in the same manner as in Example 1 are as follows:

Parallel ray transmittance: 92%

Oxygen permeability: 18 x 10$^{-11}$ cc·cm/cm$^2$·sec·mmHg

Specific gravity: 1.318

Refractive index, $n_D^{25}$: 1.443

The contact lens material permitted easy machining and polishing.

Example 11:

A mixture of 7.17 g of 2-hydroxyethyl methacrylate, 7.65 g of isophorone diisocyanate and 5.18 g of perfluoro-n-hexyl acetic acid was mixed uniformly with a mixture of 45 g of 2,2,2-trifluoroethyl methacrylate, 15 g of methyl methacrylate and 20 g of perfluoro-n-octylethyl methacrylate (active hydrogen equivalent: 1.0). The resultant mixture was urethanated and polymerized in the same manner as in Example 3 to obtain a transparent, pale yellow, flexible and rod-like contact lens material according to this invention. Physical properties of the contact lens material determined in the same manner as in Example 1 are as follows:

Parallel ray transmittance: 89%

Oxygen permeability: 29 x 10$^{-11}$ cc·cm/cm$^2$·sec·mmHg

Specific gravity: 1.437

Refractive index, $n_D^{25}$: 1.435

The contact lens material permitted easy machining and polishing.

Example 12:

A mixture of 9.36 g of hydroxypropyl methacrylate, 11.40 g of isophorone diisocyanate and 4.24 g of trifluoroacetic amide and a mixture of 20 g of methyl methacrylate, 45 g of 2,2,3,4,4,4-hexafluorobutyl methacrylate and 10 g of N-vinylpyrrolidone were mixed uniformly into a solution, followed by urethanation and polymerization in the same manner as in Example 3 to obtain a pale yellow, transparent, flexible and rod-like contact lens material according to this invention. Physical properties of the contact lens material determined in the same manner as in Example 1 are as follows:

Parallel ray transmittance: 88%

Oxygen permeability: 8 x 10$^{-11}$ cc·cm/cm$^2$·sec·mmHg

Specific gravity: 1.389

Refractive index, $n_D^{25}$: 1.452

The contact lens material permitted easy machining and polishing.

Referential Example 1 (corresponding to Example 2; excessive active hydrogen equivalent):

Mixed were 20.21 g of 1,2-bis(3-methacryloxy-2-hydroxypropoxy)ethane, 11.29 g of isophorone diisocyanate and 18.50 g of 2-(perfluoro-n-hexyl)ethanol (active hydrogen equivalent: about 1.65). A bifunctional monomer, which contained a urethane bond having 2-perfluoro-n-hexylethyl groups as side chains, was synthesized in the same manner as in Example 2. When the bifunctional monomer was mixed with 20 g of N-vinylpyrrolidone and 30 g of 2,2,3,4,4,4-hexafluorobutyl methacrylate, a white precipitate was observed in the resultant mixture. The mixture was added with 0.8 g of lauroyl peroxide and polymerized. A lens thus obtained was clouded.

Referential Example 2 (corresponding to Example 2; unduly small active hydrogen equivalent):

Mixed were 9.57 g of 1,2-bis(3-methacryloxy-2-hydroxypropoxy)ethane, 20.29 g of isophorone diisocyanate and 20.14 g of 2-(perfluoro-n-hexyl)ethanol (active hydrogen equivalent: about 0.61). A bifunctional monomer, which contained a urethane bond having 2-perfluoro-n-hexylethyl groups as side chains, was synthesized in the same manner as in Example 2. The bifunctional monomer was added with 20 g of N-vinylpyrrolidone, 30 g of 2,2,3,4,4,4-hexafluorobutyl methacrylate and 0.8 g of lauroyl peroxide as a polymerization initiator. The resultant mixture was then charged in a contact lens mold made of glass, followed by polymerization at 60°C for 16 hours. A contact lens thus formed had a yellowish brown color. Difficulties were encountered upon release of the contact lens from the glass mold.

Referential Example 3 (corresponding to Example 7; excessive active hydrogen equivalent):

A monomer, which contained a urethane bond having a 2-perfluoro-n-hexylethyl group as aside chain, was synthesized in the same manner as in Example 7 except that the amounts of 2-hydroxyethyl methacrylate, 2-isocyanatoethyl-2,6-diisocyanatohexanoate and 2-(perfluoro-n-hexyl)ethanol were changed to 13.82 g, 8.6 g and 17.58 g respectively. When the monomer was mixed with 15 g of N-vinylpyrrolidone, 20 g of 2,2,2-trifluoroethyl methacrylate and 25 g of 2,2,3,4,4,4-hexafluorobutyl methacrylate, the resultant mixture was clouded, thereby failing to obtain a colorless and transparent contact lens material.

Referential Example 4 (corresponding to Example 7; unduly small hydrogen equivalent):

Polymerization was carried out in a test tube in the same manner as in Example 7 except that the amounts of 2-hydroxyethyl methacrylate, 2-isocyanatoethyl-2,6-diisocyanatohexanoate and 2-(per-fluoro-n-hexyl)ethanol were changed to 8.13 g, 16.70 g and 15.17 g respectively. The resultant resin had a yellowish brown color. It adhered firmly on the glass wall of the test tube. It was difficult to release the resin from the test tube.

## Claims

1. A contact lens material consisting of a polymer containing fluorinated side chains and urethane bonds which has been obtained by reacting and polymerizing the following component (A) or at least 15 wt.% of the following component (A) and up to 85 wt.% of the following component (B);

Component (A) being a mixture of (1) a radical-polymerizable monomer containing at least one active hydrogen atom which can undergo an addition reaction with an isocyanate group, (2) a bifunctional or higher functional polyisocyanate compound and (3) a compound represented by $R_f \cdot (OH)_n$, $R_f \cdot COOH$, $R_f \cdot NH_2$ or $R_f \cdot CONH_2$ wherein n stands for 1 or 2 and $R_f$ means a fluorinated $C_{1-25}$-alkyl group, alkylphenyl group or phenyl group; or an addition reaction product thereof, and

Component (B) being at least one monomer copolymerizable with the radical-polymerizable monomer (1) of the component (A).

2. The contact lens material as claimed in claim 1, wherein the polyisocyanate compound (2) of the component (A) is a trifunctional or higher functional polyisocyanate compound.

3. The contact lens material as claimed in claim 1, wherein the ratio of the total molar number [H] of active hydrogen atoms of the radical-polymerizable monomer (1) and those of the fluorine-containing compound (3) to the molar number [NCO] of isocyanate groups of the polyisocyanate compound (2), namely, the active hydrogen equivalent [H]/[NCO] is greater than 0.7 but smaller than 1.5.

4. The contact lens material as claimed in claim 1, wherein the total fluorine content of the component (A) is at least 3 wt.%.

5. The contact lens material as claimed in claim 1, wherein the radical-polymerizable monomer (1) of the component (A) contains plural radical-polymerizable groups.

6. The contact lens material as claimed in claim 1, wherein the radical-polymerizable monomer (1) of the component (A) is a diacrylate or dimethacrylate containing at least one hydroxyl group.

7. The contact lens material as claimed in claim 1, wherein component (B) comprises a water-soluble monomer.

8. The contact lens material as claimed in claim 1, wherein component (B) comprises at least one of an acrylate or methacrylate containing a fluorine-containing alkyl group and an acrylate or methacrylate containing an organosilane group.

9. The contact lens material as claimed in claim 1, wherein component (B) comprises a water-soluble monomer and at least one of an acrylate or methacrylate containing a fluorine-containing alkyl group and an acrylate or methacrylate containing an organosilane group.

**Patentansprüche**

1. Kontaktlinsen-Material, bestehend aus einem Polymeren mit fluorierten Seitenketten und Urethan-Bindungen, das durch Reaktion und Polymerisation der folgenden Komponente (A) oder wenigstens 15 Gew.-% der folgenden Komponente (A) und bis zu 85 Gew.-% der folgenden Komponente (B) erhalten wurde; dabei ist die Komponente (A) eine Mischung von (1) einem radikalisch polymerisierbaren Monomeren mit mindestens einem aktiven Wasserstoff-Atom, das eine Additionsreaktion mit einer Isocyanat-Gruppe eingehen kann, (2) einer bifunktionellen oder höher funktionellen Polyisocyanat-Verbindung und (3) einer Verbindung, die dargestellt wird durch $R_{f'}(OH)_n$, $R_{f'}COOH$, $R_{f'}NH_2$ oder $R_{f'}CONH_2$, wobei n für 1 oder 2 steht, und $R_f$ eine fluorierte Alkyl-Gruppe (mit 1 bis 25 C-Atomen), Alkylphenyl-Gruppe oder Phenyl-Gruppe bedeutet;
oder ein Additionsreaktionsprodukt davon, und
die Komponente (B) ist mindestens ein Monomer, das mit dem radikalisch polymerisierbaren Monomeren (1) der Komponente (A) copolymerisierbar ist.

2. Kontaktlinsen-Material nach Anspruch 1, wobei die Polyisocyanat-Verbindung (2) der Komponente (A) eine trifunktionelle oder höher funktionelle Polyisocyanat-Verbindung ist.

3. Kontaktlinsen-Material nach Anspruch 1, wobei das Verhältnis der Gesamtmolzahl der aktiven Wasserstoff-Atome [H] des radikalisch polymerisierbaren Monomeren (1) und der Fluor enthaltenden Verbindung (3) zur Molzahl [NCO] der Isocyanat-Gruppen der Polyisocyanat-Verbindung (2), - nämlich das Äquivalent der aktiven Wasserstoffe [H]/[NCO] - , größer ist als 0,7 , aber kleiner ist als 1,5.

4. Kontaktlinsen-Material nach Anspruch 1, wobei der Fluor-Gesamtgehalt der Komponente (A) mindestens 3 Gewichts-% beträgt.

5. Kontaktlinsen-Material nach Anspruch 1, wobei das radikalisch polymerisierbare Monomer (1) der Komponente (A) mehrere radikalisch polymerisierbare Gruppen enthält.

6. Kontaktlinsen-Material nach Anspruch 1, wobei das radikalisch polymerisierbare Monomer (1) der Komponente (A) ein Diacrylat oder ein Dimethacrylat mit mindestens einer Hydroxyl-Gruppe ist.

7. Kontaktlinsen-Material nach Anspruch 1, wobei die Komponente (B) ein wasserlösliches Monomer umfasst.

8. Kontaktlinsen-Material nach Anspruch 1, wobei die Komponente (B) ein Acrylat oder Methacrylat mit einer Fluor enthaltenden Alkyl-Gruppe und/oder ein Acrylat oder Methacrylat mit einer Organosilan-Gruppe umfasst.

9. Kontaktlinsen-Material nach Anspruch 1, wobei die Komponente (B) ein wasserlösliches Monomer und ein Acrylat oder Methacrylat mit einer Fluor enthaltenden Alkyl-Gruppe und/oder ein Acrylat oder Methacrylat mit einer Organosilan-Gruppe umfasst.

**Revendications**

1. Matériau de lentille de contact constitué d'un polymère contenant des chaînes latérales fluorées et des liaisons uréthanne, qu'on obtient en faisant réagir et en polymérisant le constituant (A) suivant ou au moins 15 % en poids du constituant (A) suivant et jusqu'à 85 % en poids du constituant (B) suivant ;
le constituant (A) étant un mélange de (1) un monomère polymérisable par une polymérisation radicalaire contenant au moins un atome d'hydrogène actif qui peut subir une réaction d'addition avec un groupe isocyanate, (2) un composé polyisocyanate bifonctionnel ou de plus haute fonctionnalité, et de (3) un composé représenté par $R_{f'}(OH)_n$, $R_{f'}COOH$, $R_{f'}NH_2$ ou $R_{f'}CONH_2$ où n représente 1 ou 2 et $R_f$ représente un groupe alkyle en $C_1$ à $C_{25}$, un groupe alkylphényle ou un groupe phényle fluorés ; ou un produit de réaction d'addition de ceux-ci, et
le constituant (B) étant au moins un monomère copolymérisable avec le monomère polymérisable par une polymérisation radicalaire (1) du constituant (A).

2. Matériau de lentille de contact selon la revendication 1, dans lequel le composé polyisocyanate (2) du constituant (A) est un composé polyisocyanate trifonctionnel ou de plus haute fonctionnalité.

3. Matériau de lentille de contact selon la revendication 1, dans lequel le rapport du nombre molaire total [H] des atomes d'hydrogène actifs du monomère polymérisable par une polymérisation radicalaire (1) et de ceux du composé contenant du fluor (3), au nombre molaire [NCO] des groupes isocyanates du composé polyisocyanate (2), à savoir l'équivalent d'hydrogène actif [H]/[NCO], est supérieur à 0,7 mais inférieur à 1,5.

4. Matériau de lentille de contact selon la revendication 1, dans lequel la teneur totale en fluor du constituant (A) est d'au moins 3 % en poids.

5. Matériau de lentille de contact selon la revendication 1, dans lequel le monomère polymérisable par une polymérisation radicalaire (1) du constituant (A) contient plusieurs groupes polymérisables par une polymérisation radicalaire.

6. Matériau de lentille de contact selon la revendication 1, dans lequel le monomère polymérisable par une polymérisation radicalaire (1) du constituant (A) est un diacrylate ou un diméthacrylate contenant au moins un groupe hydroxyle.

7. Matériau de lentille de contact selon la revendication 1, dans lequel le constituant (B) comprend un monomère hydrosoluble.

8. Matériau de lentille de contact selon la revendication 1, dans lequel le constituant (B) comprend au moins un constituant choisi parmi un acrylate ou un méthacrylate contenant un groupe alkyle contenant du fluor et un acrylate ou un méthacrylate contenant un groupe organosilane.

9. Matériau de lentille de contact selon la revendication 1, dans lequel le constituant (B) comprend un monomère hydrosoluble et au moins un constituant choisi parmi un acrylate ou un méthacrylate contenant un groupe alkyle contenant du fluor et un acrylate ou un méthacrylate contenant un groupe organosilane.